# EUROPEAN PATENT APPLICATION

(11) **EP 1 096 420 A2**
(43) Date of publication of application: **02.05.2001**
(21) Application number: 00309473.7
(22) Date of filing: 27.10.2000
(51) Int. Cl.: G06K 11/18

(54) **Director (data input device)**

(30) Priority: 29.10.1999 GB 9925626
(71) Applicant: Clarke, Stephen Paul, Middlesex TW12 BX (GB)
(72) Inventor: Clarke, Stephen Paul, Middlesex TW12 BX (GB)

(57) **Abstract**

A wireless data input device comprises a body 1 having upper and lower surfaces with a ball 4 retained within the body for rotational movement relative to the body. A rotational transducer 5 produces electrical signals derived from rotation of the ball 4 and a transmitter transmits the electrical signals. The device also has a plurality of push buttons 8-11 for producing electrical signals when the buttons are pushed. The ball 4 projects from the lower surface of the body and is accessible from the upper surface of the body 1 so that the device can be used as a mouse when the ball 4 is in contact with a surface or as a track ball when the ball 4 is not in contact with a surface. The buttons 8-11 are arranged to form two functional groups with buttons 8-11 in the different groups having duplicate functions and the buttons 8 and 9 of one group being arranged to be readily accessible when the device is used as a mouse and the buttons 10 and 11 of the other group being arranged to be readily accessible when the device is used as a track ball.

## Description

This invention relates to a wireless data input device and in particular to a wireless data input device for inputting data to a computer.

In order to allow data input to electronic devices including computers a number of devices are conventionally used. The most common method of data input is a keyboard, but with the growing proportion of electronic devices and particularly personal computers which are menu driven using a graphical user interface, it is now extremely common to employ additional data input devices supplementing or replacing the keyboard.

The most common such device is the well known computer mouse. A less common alternative is a tracker ball. Almost all personal computers employ one of these two devices as a data input device complimentary to the keyboard.

A computer mouse generally has a flat lower surface and an upper surface shaped to be comfortably gripped by the hand and having two or three push buttons on the upper surface. A ball, generally a plastics coated steel ball bearing, is mounted within the mouse projecting out of the lower surface so that movement of the mouse across a horizontal surface results in corresponding rotating of the ball. The ball is in contact with transducers which convert rotation of the ball into electrical signals. The electrical signals generated by the transducers and electrical signals indicating operation of the push buttons are supplied to the computer or other electronic device as control input signals. The original and most common data connection between the mouse and the control device is by cable but so called wireless mouse devices which transmit the information by RF signals are also available.

A tracker ball input device is normally incorporated into a keyboard unit for a personal computer or secured to the casing of other equipment, but some hand held models do exist. The tracker ball input device comprises a ball mounted to project clear of the surface of the device and having associated rotation transducers to convert rotation of the ball into electrical signals for input to the computer or other equipment. The operator rotates the ball with their hand or fingers, depending on the size of the ball, to generate control signals.

Mouse type devices suffer from the disadvantage that they limit the user to remaining stationary close to the computer or other equipment being operated. Mice require a flat area of significant size with a surface giving a good grip to the surface coating of the ball for reliable operation. As a result, a user employing a mouse, even a wireless mouse, cannot move around while operating the mouse and is limited to locations adjacent suitable horizontal surfaces for mouse operation.

Tracker ball devices of the hand held type allow a user to move around while employing the device, but a tracker ball is inconvenient to use for some purposes.

The present invention is intended to overcome this problem, at least in part, and provide a more convenient and versatile data input device.

This invention provides a wireless data input device comprising a body having upper and lower surfaces, a ball retained within the body for rotational movement relative to the body, rotational transducer means for producing electrical signals derived from rotation of the ball, transmitter means for transmitting the electrical signals, a plurality of push buttons for producing electrical signals when the buttons are operated, and a power supply, the ball and body being arranged so that the ball projects from the lower surface of the body and is accessible from the upper surface of the body so that the device can be used as a mouse when the ball is in contact with a surface or as a track ball when the ball is not in contact with the surface; and the buttons being arranged to form two functional groups with buttons in the different groups having duplicate functions and the buttons of one group being arranged to be readily accessible when the device is used as a mouse and the buttons of the other group being arranged to be readily accessible when the device is used as a track ball.

This arrangement of the buttons ensures that a user can easily and conveniently operate the device regardless of whether it is used as a mouse or as a track ball.

An embodiment of the invention will now be described, by way of example only, with reference to the accompanying diagrammatic figures, in which:

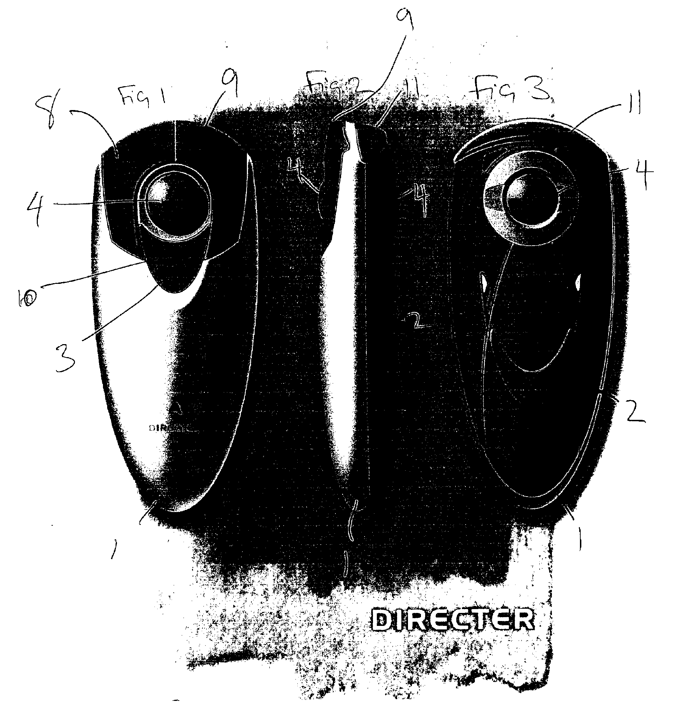

Figure 1 shows a top view of a device according to the invention;
Figure 2 shows a side view of the device of Figure 1;
Figure 3 shows a bottom view of the device of Figure 1;
Figure 4 shows a see-through top view of the device of Figure 1;

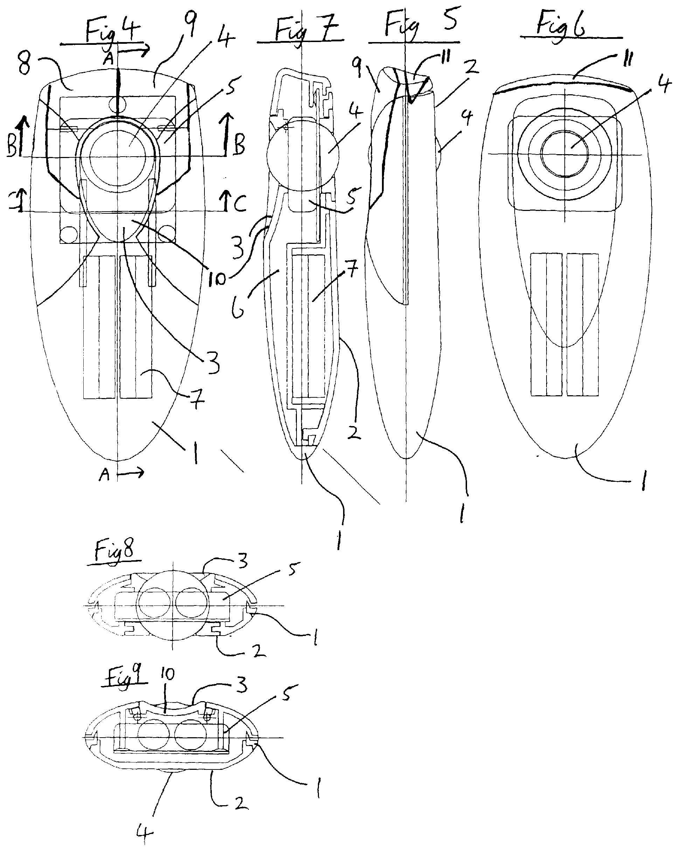

Figure 5 shows a further side view of the device of Figure 1;
Figure 6 shows a further bottom view of the device of Figure 1;
Figure 7 shows a cross-sectional view along the line A-A in Figure 4;
Figure 8 shows a cross-sectional view along the line B-B in Figure 4, and
Figure 9 shows a cross-section along the line C-C in Figure 4.

The data entry device comprises a casing forming a body 1 shaped to be easily gripped in the hand and having a flat section 2 on its lower surface and a recess 3 in its upper surface.

A ball 4 is retained within the body 1 and is mounted to be able to rotate freely relative to the body 1. The ball 4 is a plastics coated steel ball.

A rotational transducer unit 5 is arranged within the casing 1 adjacent to the ball 4. The transducer unit 5 converts rotational movement of the ball 4 relative to the body 1 into electrical signals which represent the rotational movement.

The transducer unit 5 supplies the electrical signals to a processor and RF transmitter unit 6 which receives the electrical signals representing the rotation of the ball 4 and processes to produce an RF signal which it transmits to a receiver unit (not shown) associated or integrated with an electrical device to be operated or controlled by the device.

A pair of batteries 7 inside the casing 1 provide power to the other parts of the device.

When the device is held in a users hand and the flat section 2 of the lower surface of the body 1 placed in contact with a flat surface, movement of the device across the flat surface will rotate the ball 4 by friction with the surface similarly to a conventional mouse to generate data input signals. Alternatively, with the device held in the user's hand the user can rotate the ball 4 with the thumb or fingers by reaching into the recess 3 in the upper surface of the body 1 and moving the ball 4 to generate data input signals so that the device can act similarly to a tracker ball.

Four buttons for generating further data input signals are formed on the outer surface of the body 1.

First button and second button 8 and 9 having a generally L shape are formed in front of and on opposite sides of the ball 4 on the upper surface of the body 1. The first button 8 is formed in front of the ball 4 to the left of the centre line of the device and to the left hand side of the ball 4, while the second button 9 is formed in front of the ball 4 to the right of the centre line of the device and on the right hand side of the ball 4. A third button 10 is formed on the upper surface of the device within the recess 3 behind the ball 4 so that the third button 10 lies between the ends of the first and second buttons 8 and 9. Finally, a fourth button 11 is formed on the front end of the device.

The first to fourth buttons 8 to 11 are conventional push buttons which form an electrical contact when pressed and are connected to the transmitter means 6 so that data entry signals can be transmitted to a controlled device by pressing the first to fourth buttons 8 to 11.

The buttons are arranged to operate in two corresponding pairs. The first pair being formed by the first and second buttons 8 and 9 and the second pair being formed by the third and fourth buttons 10 and 11. The device is arranged so that a first data entry signal is produced by pressing either of the first and third buttons 8 and 10. A second data entry signal is produced by pressing either of the second and fourth buttons 9 and 11.

This arrangement of the buttons ensures that when a user holds the device, one of the pairs of buttons will be readily accessible for use regardless of whether the device is used as a track ball or a mouse.

When the device is used as a mouse, the first pair of buttons 8 and 9 are readily accessible to the fingers in the same way as the buttons of a conventional mouse. When the device is held in the users hand and used as a track ball, the most convenient and natural way to hold the device is with the thumb in the recess 3 to manipulate the ball 4 with the fingers wrapped around the front and lower surface of the device. In this position the second pair of buttons 10 and 11 are readily accessible to the thumb and fingers. If the holding grip is reversed so that the fingers are in the recess 3 to manipulate the ball 4, the second pair of buttons 10 and 11 are still readily accessible for the fingers and thumb respectively.

For ease of use the device would normally be configured so that the first and third buttons 8 and 10 function as a convention left mouse button while the second and fourth buttons 9 and 11 function as a conventional right mouse button. However, this arrangement could be altered if desired so that the second and third buttons 9 and 10 functioned as a conventional left mouse button while the first and fourth buttons 8 and 11 functioned as a conventional right mouse button. It is expected that this alternate arrangement of the button functions will normally be desired by left handed users.

The batteries 7 are rechargeable batteries and a contactless inductive charging unit is incorporated within the body 1 of the device so that the batteries 7 can be recharged simply by leaving the device 7 in a holster of a recharging station when not in use.

The configuration and functionality of the buttons of the preferred embodiment is not essential but is preferred because this arrangement and functionality allows intuitive operation of the device by a user simply picking it up and using it without any special instructions being required.

In addition to the configuration and functionality of the four buttons described functioning as two corresponding pairs of buttons additional buttons could be added. One possibility would be to add an additional button to function similarly to the third button sometimes provided on mouse type devices acting as a "scroll lock" button. Alternatively, the described device having four buttons 8 to 11 could be arranged to have these four buttons function as three buttons, the third button function again corresponding to the third button function found on some mouse type devices of a "scroll lock" button. In this arrangement, when the device is acting similarly to a mouse with the ball 4 being moved by frequent contact with a surface the button 10 would act as the third "scroll lock" button while when the device was being used similarly to a trackerball with the ball 4 being moved directly by the users digits the third "scroll lock" button function will be provided by the first button 8 or, where the alternate arrangement for left handed users is being employed, the second button 9.

In order for this alternative arrangement to be used it is necessary that some means for the processor and RF transmitter unit 6 to identify which mode the device is being used in, that is to say whether the device is being used similarly to a mouse or similarly to a trackerball. The simplest method of doing this is to provide an additional two position switch on the device to be manually switched by the user to convert the device operation from one mode to the other. However, it is preferred to have an automatic change over from one mode to the other. This can be achieved either by providing a sensor to sense the orientation of the device or a sensor for sensing whether pressure is being applied to the ball 4 from the bottom of the device, as will be the case when in contact with a surface to operate in a mouse mode, or from the top of the device, as will be the case when the device is being used in trackerball mode. Alternatively, both of these sensors could be used together.

The use of an inductive contactless charging system for the rechargeable batteries 7 is preferred but a recharging system employing contacts could be used. Similarly, although the use of rechargeable batteries together with an integral charging system is preferred the charging system could be omitted and the batteries 7 simply replaced with charged batteries as required.

The use of two batteries is purely exemplary and any other number could be used as convenient.

The placing of a recess 3 on the upper surface of the device to allow access to the top of the ball 4 is not essential but it is preferred because this will minimise accidental contact between the top of the ball 4 and the users hand while employing the device similarly to a mouse.

The ball 4 could be made of other materials. For example the coating could be of rubber or the ball could be formed integrally from a single material such as a phenolic resin.

The design of the device as shown in the figures is the subject of a co-pending registered design application.

It will be understood by the person skilled in the art that the above description is an example only and that any other alternative designs and devices employing the invention could be produced.

The device design shown in the figures is the subject of a co-pending registered design application.

## Claims

1. A wireless data input device comprising a body having upper and lower surfaces, a ball retained within the body for rotational movement relative to the body, rotational transducer means for producing electrical signals derived from rotation of the ball, transmitter means for transmitting the electrical signals, a plurality of push buttons for producing electrical signals when the buttons are operated, and a power supply, the ball and body being arranged so that the ball projects from the lower surface of the body and is accessible from the upper surface of the body so that the device can be used as a mouse when the ball is in contact with a surface or as a track ball when the ball is not in contact with the surface; and the buttons being arranged to form two functional groups with buttons in the different groups having duplicate functions and the buttons of one group being arranged to be readily accessible when the device is used as a mouse and the buttons of the other group being arranged to be readily accessible when the device is used as a track ball.

2. A device according to claim 1, in which the lower surface of the body has a flat region and the ball is arranged to project from the flat region.

3. A device according to claim 2, in which the power supply comprises a rechargeable battery.

4. A device according to claim 3, in which the device further comprises recharging means to recharge the battery.

5. A device according to claim 4, in which the recharging means is contactless recharging means.

6. A device according to any preceding claim, in which there are four buttons arranged in two groups of two buttons.

7. A device according to claim 6, in which the device comprises three buttons on the upper surface of the body and a button on a front surface of the body.

8. A device according to any preceding claim, in which the ball is accessible through a recess formed in the upper surface of the body.

9. A wireless data input device substantially as shown in or as described with reference to the accompanying figures.
